# EUROPEAN PATENT APPLICATION

(11) **EP 4 700 081 A1**
(43) Date of publication of application: **25.02.2026**
(21) Application number: 25788011.2
(22) Date of filing: 02.04.2025
(51) Int. Cl.: C08K 3/34, C08K 3/32, C08K 7/14, C08K 5/3492, C08K 5/00, C08L 77/02, C08L 77/06, B29B 7/38, B29B 7/90, B29B 11/10

(54) **THERMOPLASTIC RESIN COMPOSITION, METHOD FOR PREPARING SAME, AND MOLDED ARTICLE COMPRISING SAME**

(30) Priority: 22.04.2024 KR 20240053331; 22.04.2024 KR 20240053332
(71) Applicant: LG Chem, Ltd., Seoul 07336 (KR)
(72) Inventor: SEO, In Seok, Seoul 07796 (KR); KIM, Hyuntae, Seoul 07796 (KR); HAM, Hyeseung, Seoul 07796 (KR); PARK, Jae Chan, Seoul 07796 (KR)
(74) Representative: Goddar, Heinz J.
(86) International application number: PCT/KR2025/004399
(87) International publication number: WO 2025/225922

(57) **Abstract**

The present invention relates to a thermoplastic resin composition, a method of preparing the same, and a molded article including the same. More particularly, the present invention relates to a thermoplastic resin composition including 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e), a method of preparing the thermoplastic resin composition, and a molded article including the thermoplastic resin composition.

According to the present invention, the present invention has an effect of providing a thermoplastic resin composition having excellent flame retardancy and electrical insulation properties, being capable of ensuring the safety of property and life due to excellent flame delay properties thereof during thermal runaway by forming ceramics and delaying flame propagation in case of high temperature and flame occurrence, and having eco-friendliness, a method of preparing the thermoplastic resin composition, and a molded article including the thermoplastic resin composition.

## Description

### [Technical Field]

### [Cross-Reference to Related Application]

This application claims priority to Korean Patent Application No. 10-2024-0053331, filed on April 22, 2024, and Korean Patent Application No. 10-2024-0053332, filed on April 22, 2024, in the Korean Intellectual Property Office, the disclosures of each of which are incorporated herein by reference.

The present invention relates to a thermoplastic resin composition, a method of preparing the same, and a molded article including the same. More particularly, the present invention relates to an environmentally friendly thermoplastic resin composition having excellent flame retardancy and electrical insulation properties and being capable of ensuring the safety of property and life by forming ceramics and delaying flame propagation when an unexpected ultra-high temperature flame and the resulting pressure occur, a method of preparing the thermoplastic resin composition, and a molded article including the thermoplastic resin composition.

### [Background Art]

Thermoplastic resins have excellent impact resistance, wear resistance, cold resistance, chemical resistance, and electrical insulation properties and are widely used in various fields such as household goods, electrical and electronic parts, automobile parts, building materials, and various industrial materials.

Recently, thermoplastic resins applied to automobile parts, especially electric vehicle batteries, require higher safety against fire. Accordingly, the thermoplastic resins are required to have flame retardancy in the event of thermal runaway.

'Thermal runaway', the main cause of electric vehicle battery fires, is a phenomenon in which the temperature rises uncontrollably and an explosion occurs when abnormal stress is applied to a battery cell. When the internal temperature of the battery increases above a certain level due to a short circuit such as overvoltage or over discharge, a fire may occur. However, lithium-ion batteries are highly reactive with water, making it difficult to extinguish a fire with water. In addition, as the use of high-capacity batteries increases to improve driving range, the risk of thermal runaway increases.

Conventionally, when preparing a thermoplastic resin, flame retardancy and flame delay properties are imparted to the thermoplastic resin by using a combination of halogen compounds and antimony compounds. The method of imparting flame retardancy by combining halogen compounds and antimony compounds can secure flame retardancy of grade V-0 or grade 5V according to the UL 94 test. However, according to the above method, the flame delay properties are seriously reduced when a flame of 1200 °C or higher and the resulting pressure are generated. In addition, halogenated hydrogen gas generated during the processing process or environmental hormones released during the combustion process may have fatal adverse effects on the human body.

In addition, flame retardants that do not contain halogen are called non-halogen flame retardants, and the most widely used non-halogen flame retardants are phosphorus flame retardants that contain phosphorus. However, the flame retardancy of phosphorus flame retardants is significantly lower than that of halogen-containing flame retardants. Accordingly, by adding a large amount of flame retardant, flame retardancy of grade V-0 or grade 5V according to the UL 94 test can be obtained, but flame delay properties capable of preventing thermal runaway when an unexpected ultra-high temperature flame of 1200 °C or higher and the resulting pressure occur are lacking.

In addition, thermoplastic resins used in electric vehicle battery parts require electrical insulation properties because the parts are exposed to electricity for long periods of time.

Therefore, there is a need to develop a thermoplastic resin composition that has excellent electrical insulation properties and flame retardancy, ensures safety against additional damage due to excellent flame delay properties during thermal runaway, and satisfies the quality required for automobile parts, especially electric vehicle battery parts.

### [Related Art Documents]

### [Patent Documents]

Japanese Patent Application Publication No. hei 2-187456

### [Disclosure]

### [Technical Problem]

Therefore, the present invention has been made in view of the above problems, and it is one object of the present invention to provide an environmentally friendly thermoplastic resin composition having excellent flame retardancy, electrical insulation properties, and flame delay properties and thus being capable of ensuring high safety for property and life by forming ceramics during thermal runaway.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

### [Technical Solution]

I) In accordance with one aspect of the present invention, provided is a thermoplastic resin composition including 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e).
II) According to I), the polymer (a) may include one or more selected from the group consisting of a polyamide resin, a poly(arylene ether) resin, a polyalkylene terephthalate resin, a polystyrene resin, a polycarbonate resin, and a modified resin thereof.
III) According to I) or II), the ceramics-forming binder (b) may include a metal phosphorus flame retardant.
IV) According to I) to III), the ceramics-forming metal precursor (c) may include a metal silicate, or may include magnesium (without containing magnesium oxide) or magnesium oxide in an amount of 3 % by weight or less based on a total weight of the ceramics-forming metal precursor.
V) According to I) to IV), the metal silicate may include one or more selected from the group consisting of aluminum silicate and calcium silicate.
VI) According to I) to V), the aluminum silicate may include one or more selected from the group consisting of kaolin, kaolinite, pyrophyllite, mica, feldspar, spodumene, and petalite.
VII) According to I) to VI), the calcium silicate may include wollastonite.
VIII) According to I) to VII), the ceramics-forming non-metal precursor (d) may include glass fiber.
IX) According to I) to VIII), the flame retardant (e) may include one or more selected from the group consisting of a melamine-based flame retardant, a phosphazene-based flame retardant, and a phosphate-based flame retardant.
X) According to I) to IX), when applying a 1200 °C flame formed with oxygen and propane gases to a 150 mm × 150 mm × 3 mm specimen according to torch-and-grit evaluation of UL 2596 and measuring flame endurance time until a hole or drip is formed, the thermoplastic resin composition may have a flame endurance time of 600 seconds or more, or when a comparative tracking index (CTI) is measured using a 3 mm thick specimen according to IEC 60112, the thermoplastic resin composition may be classified as grade 1 or higher by performance level category (PLC) classification.
XII) In accordance with another aspect of the present invention, provided is a method of preparing a thermoplastic resin composition, the method including kneading and extruding 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e), wherein the kneading and extrusion are performed using an extruder with nine or more kneading blocks.
XIII) In accordance with still another aspect of the present invention, provided is a flame retardant composition including a ceramics-forming binder, a ceramics-forming metal precursor, a ceramics-forming non-metal precursor, and a flame retardant.
XIV) According to XIII), based on a total weight thereof, the flame retardant composition may include 11 to 34 % by weight of the ceramics-forming binder, 14.5 to 41 % by weight of the ceramics-forming metal precursor, 24 to 59 % by weight of the ceramics-forming non-metal precursor, and 4 to 14 % by weight of the flame retardant.
XV) In accordance with yet another aspect of the present invention, provided is a molded article including the thermoplastic resin composition according to I) to XI).

### [Advantageous Effects]

According to the present invention, the present invention has an effect of providing a thermoplastic resin composition having a flame retardancy of grade V-0 or higher as evaluated according to the UL 94 test, having excellent electrical insulation properties, being capable of ensuring the safety of property and life even during thermal runaway by blocking flame propagation by forming ceramics when an ultra-high temperature flame of 1200 °C or higher and the resulting pressure occur (e.g., the thermoplastic resin composition has a flame endurance time of 600 seconds or more or a grade of 1 or higher according to the performance level category (PLC) classification by measuring the comparative tracking index (CTI)), and being applicable to automotive parts, especially electric vehicle batteries, due to eco-friendliness thereof, a method of preparing the thermoplastic resin composition, and a molded article including the thermoplastic resin composition.

### [Description of Drawings]

FIG. 1 is a schematic diagram of an extruder having nine or more kneading blocks according to the present invention.
FIG. 2 is a schematic diagram showing the measurement method according to the torch-and-grit evaluation of UL 2596.
FIG. 3 is a photograph of an actual measurement scene according to the torch-and-grit evaluation of UL 2596.
FIG. 4 shows an actual measurement scene of the torch-and-grit evaluation of UL 2596 for a thermoplastic resin composition according to Example 1 (left image) and a specimen after 600 seconds of flame application (right image).
FIG. 5 shows an actual measurement scene of the torch-and-grit evaluation of UL 2596 for a thermoplastic resin composition according to Example 5 (left image) and a specimen after evaluation (right image).
FIG. 6 shows the specimen after torch-and-grit evaluation of UL 2596 for a thermoplastic resin composition according to Comparative Example 6, with the front side of the specimen on the left and the back side of the specimen on the right.

### [Best Mode]

Hereinafter, a thermoplastic resin composition of the present invention, a method of preparing the same, and a molded article including the same will be described in detail.

The present inventors confirmed that, when a thermoplastic resin composition was prepared by including a polymer, a ceramics-forming binder, a ceramics-forming metal precursor, a ceramics-forming non-metal precursor, and a flame retardant in predetermined contents, the thermoplastic resin composition had a flame retardancy of grade V-0 or higher as measured according to the UL 94 test, and had excellent insulating properties. In addition, when an ultra-high temperature flame of 1200 °C or higher and the resulting pressure occurred, by forming ceramics and delaying flame propagation, even when thermal runaway occurred, the thermoplastic resin composition secured the safety of property and life. Based on these results, the present inventors conducted further studies to complete the present invention.

The thermoplastic resin composition according to the present invention is described in detail as follows.

The thermoplastic resin composition of the present invention includes 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e). In this case, flame retardancy and insulating properties may be excellent. In addition, when an ultra-high temperature flame occurs unexpectedly, by forming ceramics and delaying flame propagation, the safety of property and life may be secured, and eco-friendliness may be achieved.

Hereinafter, each component of the thermoplastic resin composition of the present invention will be described in detail.

In the present invention, ceramics as defined in the technical or scientific field to which the present invention belongs may be used in the present invention without particular limitation. As a specific example, ceramics may refer to a sintering process in which metals and non-metals or metalloids combine through heat treatment to form crystals, and then the formed crystals come together to form a three-dimensional network structure. According to these definitions, the ceramics-forming metal precursor corresponding to a metal in the present invention is defined as an inorganic substance containing a metallic element, and the ceramics-forming non-metal precursor corresponding to a non-metal or metalloid is defined as a substance containing silicon dioxide in an amount of 50 % by weight or more.

### (a) Polymer

For example, the polymer may include one or more selected from the group consisting of a polyamide resin, a poly(arylene ether) resin, a polyalkylene terephthalate resin, a polystyrene resin, a polycarbonate resin, and a modified resin thereof, preferably one or more selected from the group consisting of a polyamide resin, a poly(arylene ether) resin, and a polyalkylene terephthalate resin. In this case, mechanical properties such as impact strength, tensile strength, elongation, flexural strength, and surface hardness, electrical insulation properties, and flame retardancy may be excellent. In addition, when thermal runaway occurs, the safety of property and life may be secured due to excellent flame delay properties.

For example, based on a total weight of components (a) to (e), the polymer (a) may be included in an amount of 32.5 to 49 % by weight, preferably 34 to 47 % by weight, more preferably 35 to 46 % by weight or 36 to 45 % by weight, still more preferably 38 to 45 % by weight, still more preferably 38 to 43 % by weight. Within this range, mechanical properties, electrical insulation properties, and flame retardancy may be excellent. In addition, when thermal runaway occurs, the safety of property and life may be secured due to excellent flame delay properties.

In the present invention, thermal runaway refers to a state in which a temperature change changes the environment in a way that further accelerates the temperature change. That is, thermal runaway may be said to be a process in which the cause of a mechanical process is an increase in temperature, and the energy released as a result of that process increases the temperature, accelerating the process.

In the present invention, the modification is not particularly limited when the modification is a modification by a method of modifying a resin commonly used in the technical field to which the present invention belongs. For example, the above modification may mean grafting by introducing at least one compound of α, β-unsaturated dicarboxylic acid and an anhydride thereof into an unmodified resin. As another example, the above modification may mean that, when manufacturing an unmodified resin, at least one compound of α, β-unsaturated dicarboxylic acid and an anhydride thereof is introduced as a comonomer and copolymerized.

### Polyamide resin

For example, the polyamide resin may be a polyamide prepared by polycondensation of lactam or ω-amino acid or polycondensation of two or more types of lactam and ω-amino acid, or a polyamide prepared by polycondensation of a diacid and a diamine, but the present invention is not limited thereto.

Preferably, the polyamide resin may include one or more selected from the group consisting of a copolymer of diamine having 2 to 30 carbon atoms and dicarboxylic acid having 4 to 30 carbon atoms; a lactam polymer; an aminocarboxylic acid polymer; and a copolymer of lactam and aminocarboxylic acid. In this case, mechanical properties and appearance quality may be excellent.

In addition, the polyamide resin may be, for example, homopolyamide, copolyimide, or a mixture thereof.

For example, the polyamide resin may be crystalline, semi-crystalline, or amorphous.

The polymer of a diamine having 2 to 30 carbon atoms and a dicarboxylic acid having 4 to 30 carbon atoms may include preferably one or more polymers selected from the group consisting of polyamides obtained by polymerizing an aliphatic or aromatic diamine, such as ethylenediamine, tetramethylenediamine, hexamethylenediamine, undecamethylenediamine, dodecamethylenediamine, 2,2,4-trimethylhexamethylenediamine, 2,4,4-trimethylhexamethylenediamine, 5-methylnonahexamethylenediamine, metaxylenediamine, paraxylenediamine, 1,3-bisaminomethylcyclohexane, 1,4-bisaminomethylcyclohexane, 1-amino-3-aminomethyl-3,5,5-trimethylcyclohexane, bis(4-aminocyclohexane)methane, bis(4-methyl-4-aminocyclohexyl)methane, 2,2-bis(4-aminocyclohexyl) propane, bis(aminopropyl)piperazine, and aminoethylpiperidine, and an aliphatic or aromatic dicarboxylic acid, such as adipic acid, sebacic acid, azelaic acid, terephthalic acid, 2-chloroterephthalic acid, and 2-methylterephthalic acid.

The lactam polymer may preferably be obtained by ring-opening polymerization of a lactam compound such as caprolactam and laurolactam.

The aminocarboxylic acid polymer may preferably be obtained by polymerizing aminocarboxylic acids such as aminocaproic acid, 11-aminoundecanoic acid, and 12-aminododecanoic acid.

The polyamide resin may preferably include one or more selected from the group consisting of polyamide 6, polyamide 66, polyamide 46, polyamide 56, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/9I, and polyamide 66/12/6I, more preferably one or more selected from the group consisting of polyamide 6, polyamide 56, and polyamide 66. In this case, economic efficiency or processability may be excellent. In addition, the mechanical properties and heat resistance may be improved.

For example, the polyamide resin may have a relative viscosity (RV) of 1.5 to 3.5, preferably 1.7 to 3, more preferably 2.0 to 2.7. In this case, overheating due to friction between the screw of an extruder and the molten composition during extrusion molding may be prevented. In addition, since tension applied to the molten composition is appropriate, extrusion processability may be excellent.

In the present invention, unless otherwise stated, the relative viscosity is measured using a UFIT-UVS instrument at 20 °C using a solution prepared by dissolving 1 g of polyamide in 100 ml of sulfuric acid (96 wt%).

### Poly (arylene ether) resin

For example, the poly(arylene ether) resin may a homopolymer or copolymer including a unit represented by Chemical Formula 1 or 2 below.

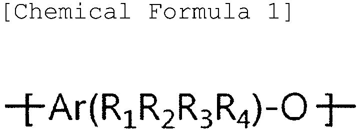

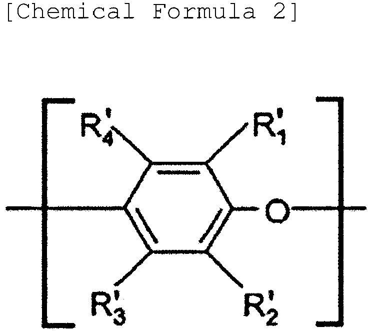

In Chemical Formulas 1 and 2, R₁, R₂, R₃, R₄, R'₁, R'₂, R'₃, and R'₄ may be substituents of an arylene group (Ar) or a phenylene group and may be each independently or simultaneously hydrogen, chlorine, bromine, iodine, alkyl, allyl, phenyl, alkylbenzyl, chloroalkyl, bromoalkyl, cyanoalkyl, cyano, alkoxy, phenoxy, or nitro group, Ar may be an arylene group having 6 to 20 carbon atoms, and the alkoxy may be an alkoxy having 1 to 4 carbon atoms.

Preferably, R₁, R₂, R₃, R₄, R'₁, R'₂, R'₃, and R'₄ may be substituents of an arylene group (Ar) or a phenylene group and may be each independently or simultaneously hydrogen, chlorine, bromine, iodine, methyl, ethyl, propyl, allyl, phenyl, methylbenzyl, chloromethyl, bromomethyl, cyanoethyl, cyano, methoxy, phenoxy, or nitro group, and Ar may be an arylene group having 6 to 20 carbon atoms.

The average degree of polymerization of the poly(arylene ether) resin with respect to the units of Chemical Formula 1 or 2 is not particularly limited as long as the average degree of polymerization follows the definition of the present invention.

For example, a homopolymer of the poly(arylene ether) resin may include one or more selected from the group consisting of poly(2,6-dimethyl-1,4-phenylene) ether, poly(2,6-diethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dimethoxy-1,4-phenylene) ether, poly(2,6-dichloromethyl-1,4-phenylene) ether, poly(2,6-dibromomethyl-1,4-phenylene) ether, poly(2,6-diphenyl-1,4-phenylene) ether, and poly(2,5-dimethyl-1,4-phenylene) ether. In this case, mechanical properties such as impact strength, tensile strength, and flexural strength and processability may be excellent, and thus appearance quality may be improved.

In addition, the copolymer of the poly(arylene ether) resin may include one or more selected from the group consisting of a copolymer of 2,6-dimethylphenol and 2,3,6-trimethylphenol, a copolymer of 2,6-dimethylphenol and o-cresol, and a copolymer of 2,3,6-trimethylphenol and o-cresol. In this case, mechanical properties, such as impact strength and tensile strength, and processability may be excellent, thereby improving appearance quality.

The poly(arylene ether) resin may be preferably a polyphenylene ether resin.

For example, the poly(arylene ether) resin may have an intrinsic viscosity of 25 to 55 dl/g, preferably 30 to 50 dl/g, more preferably 32 to 45 dl/g. Within this range, the mechanical properties of the composition, such as impact strength and tensile strength, may be maintained at a high level while ensuring fluidity suitable for molding.

When measuring the intrinsic viscosity of the poly(arylene ether) resin, unless otherwise specified, a sample to be measured is dissolved in chloroform solvent at a concentration of 0.5 g/dl, and the intrinsic viscosity of the sample is measured at 25 °C using an Ubbelohde viscometer.

### Polyalkylene terephthalate resin

For example, the polyalkylene terephthalate resin may be polybutylene terephthalate, polyethylene terephthalate, or a mixture thereof, preferably polybutylene terephthalate. In this case, mechanical properties, fluidity, and heat resistance may be excellent.

As the polybutylene terephthalate resin, conventional polybutylene terephthalate resins may be used without particular limitation. For example, a polybutylene terephthalate resin obtained by directly esterifying 1,4-butanediol and terephthalic acid or dimethylterephthalate or by condensation polymerization through an ester exchange reaction may be used.

The polybutylene terephthalate resin may include a repeat unit represented by Chemical Formula 3 below.

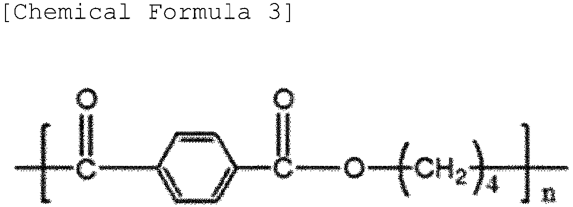

In Chemical Formula 3, n is the average degree of polymerization in the integer range from 50 to 200.

For example, the polybutylene terephthalate resin may have a melting point of 200 to 240 °C, preferably 210 to 230 °C, more preferably 220 to 230 °C as measured by differential scanning calorimetry (DSC). Within this range, mechanical properties may be maintained even at high temperatures.

The polybutylene terephthalate resin may have a melt flow rate of 7 to 11 g/10 min, preferably 8 to 10 g/10 min as measured at 250 °C under 2.16 kgf according to ISO 1133. Within this range, processability may be excellent.

A method of preparing a polyalkylene terephthalate resin commonly used in the technical field to which the present invention belongs may be used in the present invention without particular limitation. When a commercially available product satisfies the definition of polyalkylene terephthalate resin according to the present invention, the product may be used in the present invention.

The polyalkylene terephthalate resin may have an intrinsic viscosity of preferably 0.6 to 1.4 dl/g, more preferably 0.8 to 1.4 dl/g, still more preferably 1.0 to 1.3 dl/g. Within this range, the melt index may be appropriate, so processability, molding processability, and molding stability may be excellent.

Unless otherwise stated, the intrinsic viscosity of the polyalkylene terephthalate resin may be measured according to ASTM D2857. As a specific example, a sample to be measured may be completely dissolved in methylene chloride, filtered, and the intrinsic viscosity of the filtrate may be measured at 20 °C using an Ubbelohde viscometer.

### Polystyrene resin

For example, the polystyrene resin may be a general-purpose polystyrene, a high-impact polystyrene resin, or a mixture thereof, preferably high-impact polystyrene resin. In this case, processability, dimensional stability, and tensile strength may be excellent.

For example, the general-purpose polystyrene resin may be a polymer obtained by polymerizing styrene alone. In this case, processability may be excellent.

For example, the high-impact polystyrene resin may be a rubber-reinforced polystyrene resin.

For example, the rubber may include one or more selected from the group consisting of butadiene rubbers, isoprene rubbers, copolymers of butadiene and styrene, and alkyl acrylate rubbers, preferably butadiene rubbers. In this case, impact strength may be improved.

For example, based on 100 % by weight of the high-impact polystyrene resin, the rubber may be included in an amount of 3 to 25 % by weight, preferably 6 to 14 % by weight, more preferably 8 to 12 % by weight. Within this range, impact strength and fluidity may be excellent.

For example, the rubber may have a volume average particle diameter of 0.1 to 20 µm, preferably 1.0 to 15 µm. Within this range, impact strength and fluidity may be excellent.

In the present invention, the volume average particle diameter may be measured by dissolving 3 g of high-impact polystyrene resin in 100 ml of methyl ethyl ketone using a Coulter Counter LS230 device and then dispersing the undissolved rubber particles in the form of particles by the laser scattering method.

The rubber-reinforced polystyrene resin may include one or more selected from the group consisting of a high-impact styrene-butadiene (HIPS) copolymer, a styrene-butadiene-styrene (SBS) copolymer, a styrene-ethylenebutylene-styrene (SEBS) copolymer, a styrene-butadiene (SB) copolymer, a styrene-isoprene (SI) copolymer, a styrene-isoprene-styrene (SIS) copolymer, an alpha-methyl styrene-butadiene copolymer, a styrene-ethylene-propylene copolymer, a styrene-ethylene-propylene-styrene copolymer, and a styrene-(ethylene-butylene-styrene copolymer)-styrene copolymer.

For example, the rubber-reinforced polystyrene resin may be prepared by subjecting rubber and an aromatic vinyl compound to bulk polymerization, suspension polymerization, emulsion polymerization or a combination thereof. The polymerization may be thermal polymerization or may be performed in the presence of a polymerization initiator.

For example, the polymerization initiator that may be used for the polymerization may be a peroxide initiator, an azo initiator, or a mixture thereof.

The peroxide initiator may include one or more selected from the group consisting of benzoyl peroxide, t-butyl hydroperoxide, acetyl peroxide, and cumene hydroperoxide, and the azo initiator may be preferably azobisisobutyronitrile.

For example, the polystyrene resin may have a melt flow index of 2 to 20 g/10 min, preferably 3 to 15 g/10 min as measured at 200 °C under 5 kg according to ASTM D1238. Within this range, processability and physical property balance may be excellent.

### Polycarbonate resin

For example, the polycarbonate resin may be a resin obtained by polymerizing an aromatic diol compound and a carbonate precursor.

For example, the aromatic diol compound may include one or more selected from the group consisting of bis(4-hydroxyphenyl) methane, bis(4-hydroxyphenyl)ether, bis(4-hydroxyphenyl) sulfone, bis (4-hydroxyphenyl) sulfoxide, bis(4-hydroxyphenyl) sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxyphenyl)butane, 1,1-bis(4-hydroxyphenyl)cyclohexane (bisphenol Z; BPZ), 2,2-bis(4-hydroxy-3,5-dibromophenyl)propane, 2,2-bis(4-hydroxy-3,5-dichlorophenyl)propane, 2,2-bis(4-hydroxy-3-bromophenyl) propane, 2,2-bis(4-hydroxy-3-chlorophenyl) propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and α,ω-bis[3-(o-hydroxyphenyl)propyl]polydimethylsiloxane, preferably bisphenol A.

For example, the carbonate precursor may include one or more selected from the group consisting of dimethyl carbonate, diethyl carbonate, dibutyl carbonate, dicyclohexyl carbonate, diphenyl carbonate, dithoryl carbonate, bis(chlorophenyl) carbonate, m-cresyl carbonate, dinaphthyl carbonate, bis(diphenyl) carbonate, carbonyl chloride (phosgene), triphosgene, diphosgene, carbonyl bromide, and bishaloformate. In terms of manufacturing efficiency and physical properties, triphosgene, phosgene, or a mixture thereof may be preferably used.

As a specific example, the polycarbonate formed by polymerization of the aromatic diol compound and the carbonate precursor includes a repeat unit represented by Chemical Formula 4 below.

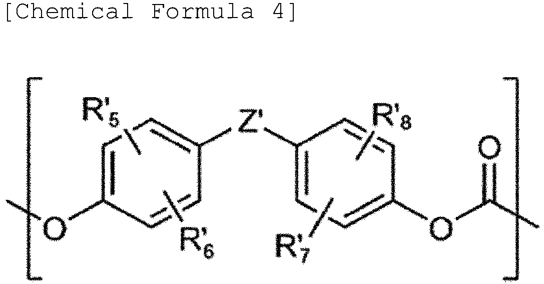

In Chemical Formula 4, R'₅ to R'₈ are each independently hydrogen, C₁₋₁₀ alkyl, C₁₋₁₀ alkoxy, or halogen, and Z' is unsubstituted C₁₋₁₀ alkylene or C₁₋₁₀ alkylene substituted with C₁₋₆ alkyl or C₆₋₂₀ aryl, unsubstituted C₃₋₁₅ cycloalkylene or C₃₋₁₅ cycloalkylene substituted with C₁₋₁₀ alkyl, O, S, SO, SO₂, or CO.

Preferably, in Chemical Formula 4, R'₅ to R'₈ are each independently hydrogen or C₁₋₃ alkyl, and Z' is unsubstituted C₁₋₆ alkylene or C₁₋₆ alkylene substituted with methyl or phenyl.

For example, the polycarbonate may have a melt index (300 °C, 1.2 kg) of 3 to 20 g/10 min, preferably 5 to 17 g/10 min, more preferably 7 to 15 g/10 min. Within this range, mechanical properties and heat resistance may be excellent.

In the present invention, the melt index is measured at 300 °C under a load of 1.2 kg according to ASTM D1238.

The average degree of polymerization of the repeat unit of Chemical Formula 4 of the polycarbonate resin is not particularly limited as long as the average degree of polymerization follows the definition of the present invention.

### (b) Ceramics-forming binder

In the present invention, the ceramics-forming binder is thermally decomposed when an ultra-high temperature flame and the resulting pressure are generated, generating a metal phosphate component. The metal phosphate component acts as a binder that combines a ceramics-forming metal precursor and a ceramics-forming non-metal precursor that has reached Gob temperature, causing physical and chemical structural changes to form ceramics. When thermal runaway of a battery occurs, the formed ceramics delays flame propagation to secure the safety of property and life and achieve environmental friendliness.

In the present invention, the Gob temperature refers to the temperature at which the ceramics-forming non-metal precursor melts and turns into a hot lump called a Gob, which can be formed into a desired shape.

In the present invention, the ultra-high temperature flame and the resulting pressure means that when a 1200 °C flame formed with oxygen and propane gases is applied to a specimen based on the torch-and-grit evaluation of UL 2596, the pressure generated from the ultra-high temperature flame is transmitted to the specimen together with the flame.

In the present invention, ceramics may preferably include components Al, Si, Ca, and P. In this case, when thermal runaway of a battery occurs, flame delay properties may be excellent.

For example, based on a total weight of components (a) to (e), the ceramics-forming binder (b) may be included in an amount of 7 to 20.5 % by weight, preferably 8 to 19 % by weight, more preferably 9 to 18 % by weight, still more preferably 9 to 17 % by weight, still more preferably 9 to 13 % by weight. Within this range, flame retardancy and electrical insulation properties may be excellent. In addition, when ultra-high temperature and the resulting pressure occur, ceramics is formed and flame propagation is delayed. Thus, even when thermal runaway occurs, safety against additional damage may be secured, and eco-friendliness may be obtained.

For example, the ceramics-forming binder (b) may include a metal phosphorus flame retardant, preferably an organic phosphinate metal salt, more preferably dialkylphosphinic acid salt represented by Chemical Formula 5 below, diphosphinic acid salt represented by Chemical Formula 6 below, or a mixture thereof. In this case, flame retardancy and electrical insulation properties may be excellent. In addition, when ultra-high temperature and the resulting pressure occur, ceramics is formed and flame propagation is delayed. Thus, even when thermal runaway occurs, the safety of property and life may be secured, and eco-friendliness may be obtained.

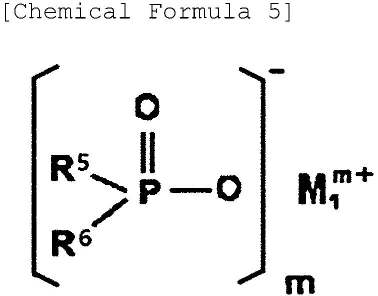

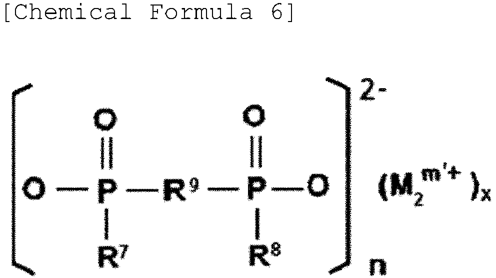

In Chemical Formulas 5 and 6, R⁵, R⁶, R⁷, and R⁸ are each independently a linear or branched C₁-C₁₀ alkyl, C₃-C₁₂ cycloalkyl, C₆-C₁₀ aryl group, or H; R⁹ is linear or branched C₁-C₁₀ alkylene, C₆-C₁₀ arylene, C₆-C₂₀ alkylarylene, or C₆-C₂₀ arylalkylene; M₁ is Mg, Ca, Al, Sb, Sn, Ge, Ti, Zn, Fe, Zr, Ce, Bi, Sr, Mn, Li, Na, or K; M₂ is Mg, Ca, Al, Sb, Sn, Ge, Ti, Zn, Fe, Zr, Ce, Bi, Sr, Mn, Li, Na, or K; m is an integer from 1 to 4; m' is an integer from 1 to 4; n is an integer from 1 to 4; and x is an integer from 1 to 4.

In Chemical Formulas 5 and 6, preferably, cycloalkyl may be independently cyclohexyl or cyclohexadimethyl.

Preferably, R⁵, R⁶, R⁷, and R⁸ may each independently be methyl, ethyl, n-propyl, isopropyl, n-butyl, tert-butyl, n-pentyl, or phenyl.

R⁹ may preferably be methylene, ethylene, n-propylene, isopropylene, n-butylene, tert-butylene, n-pentylene, n-octylene, n-dodecylene, phenylene, naphthylene, methylphenylene, ethylphenylene, tert-butylphenylene, methylnaphthylene, ethylnaphthylene, tert-butylnaphthylene, phenylmethylene, phenylethylene, phenylpropylene, or phenylbutylene.

Preferably, M₁ and M₂ may each independently be Mg, Ca, Al, Sb, Sn, Ge, Ti, Zn, Fe, Zr, Ce, Bi, Sr, Mn, Li, Na, or K. More preferably, M₁ and M₂ may each independently be Mg, Ca, Al, Ti, or Zn.

R⁵ and R⁶, and R⁷ and R⁸ may combine with each other to form a ring with the adjacent phosphorus atoms. The ring formed by R⁵ and R⁶ and R⁷ and R⁸ bonding to each other and together with the adjacent phosphorus atoms is a heteroring having the phosphorus atom as a heteroatom constituting the ring. For example, the number of atoms constituting such a ring may be from 4 to 20, preferably from 5 to 16. The heteroring having the phosphorus atom may be a bicyclo-ring or have substituents.

The dialkylphosphinic acid salt represented by Chemical Formula 5 may preferably include one or more selected from the group consisting of calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

The diphosphinic acid salt represented by Chemical Formula 6 may preferably include one or more selected from the group consisting of calcium methylene bis(methylphosphinate), magnesium methylene bis(methylphosphinate), aluminum methylene bis(methylphosphinate), zinc methylene bis(methylphosphinate), calcium 1,4-phenylene bis(methylphosphinate), magnesium 1,4-phenylene bis(methylphosphinate), aluminum 1,4-phenylene bis(methylphosphinate), and zinc 1,4-phenylene bis(methylphosphinate).

More preferably, the ceramics-forming binder (b) may include one or more selected from the group consisting of calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate, still more preferably aluminum diethylphosphinate. In this case, high flame retardancy may be achieved with a small amount of flame retardant while maintaining mechanical properties. In addition, even when thermal runaway occurs, due to excellent flame delay properties, the safety of property and life may be secured, and eco-friendliness may be achieved.

As a specific example, when aluminum diethylphosphinate is used as the ceramics-forming binder (b), organic components are volatilized into phosphoric acid gas under an ultra-high temperature flame, the remaining components change from an amorphous structure to a crystalline structure, and the structure of AlPO₃ changes to the structure of AlPO₄, bonding the ceramics-forming metal and ceramics-forming non-metal.

For example, the ceramics-forming binder (b) may have an average particle diameter of 0.1 to 100 µm, preferably 0.1 to 80 µm, more preferably 1 to 60 µm. Within this range, flame retardancy and mechanical properties may be excellent.

In the present invention, the average particle diameter of the ceramics-forming binder means the number average particle diameter obtained from the frequency distribution of particle size and particle number measured using a laser diffraction particle size analyzer, using a dispersion of a binder dispersed in a medium such as acetone as a measurement sample.

The ceramics-forming binder (b) may have a phosphorus content of preferably 20 to 35 % by weight, more preferably 22 to 30 % by weight. Within this range, flame retardancy and electrical insulation properties may be excellent. In addition, when ultra-high temperature and the resulting pressure occur, ceramics is formed and flame propagation is delayed. Thus, even when thermal runaway occurs, the safety of property and life may be secured.

In the present invention, the phosphorus content means the weight (wt%) of phosphorus converted from the molecular weight of phosphorus contained in the molecular structure of a phosphorus flame retardant.

### (c) Ceramics-forming metal precursor

In the present invention, the ceramics-forming metal precursor is combined with the ceramics-forming non-metal precursor in a Gob state by the metal phosphate component generated by the thermal decomposition of the ceramics-forming binder when an ultra-high temperature flame and the resulting pressure are generated, causing physical and chemical structural changes to form ceramics. The formed ceramics retard the flame. Thus, even when thermal runaway of a battery occurs, the safety of property and life may be secured.

For example, based on a total weight of components (a) to (e), the ceramics-forming metal precursor (c) may be included in an amount of 6.5 to 20.5 % by weight, preferably 8 to 19 % by weight or 8 to 18 % by weight, more preferably 9 to 18 % by weight, still more preferably 10 to 17 % by weight, still more preferably 13 to 17 % by weight. Within this range, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety of property and life may be secured.

For example, the ceramics-forming metal precursor (c) may include a metal silicate, or may include magnesium (without containing magnesium oxide) or magnesium oxide in an amount of 3 % by weight or less based on a total weight thereof. In this case, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety of property and life may be secured.

For example, the metal silicate may include one or more selected from the group consisting of aluminum silicate and calcium silicate, preferably aluminum silicate. In this case, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety of property and life may be secured.

For example, the aluminum silicate may include one or more selected from the group consisting of kaolin, kaolinite, pyrophyllite, mica, feldspar, spodumene, and petalite, preferably kaolin, mica, or a mixture thereof, still more preferably kaolin. In this case, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety of property and life may be secured.

For example, the calcium silicate may include wollastonite. In this case, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety of property and life may be secured.

For example, the ceramics-forming metal precursor (c) may be a magnesium-free silicate. In this case, flame retardancy and electrical insulation properties may be excellent without interference from magnesium. In addition, when ultra-high temperature flame and the resulting pressure occur, ceramics are formed by bonding with the ceramics-forming non-metal precursor, thereby delaying flame propagation. Thus, even when thermal runaway occurs, the safety may be secured.

For example, based on a total weight of the ceramics-forming metal precursor, the 'magnesium-free silicate' may include magnesium (without containing magnesium oxide) or magnesium oxide in an amount of 3 % by weight or less, preferably 2 % by weight or less, more preferably less than 2 % by weight, still more preferably 1 % by weight or less, still more preferably less than 1 % by weight, still more preferably 0.01 % by weight or more and less than 1 % by weight. Within this range, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety may be secured. In addition, when the magnesium or magnesium oxide content in the metal silicate exceeds the range, ceramics are not properly formed when an ultra-high temperature flame and the resulting pressure are generated. In addition, even when ceramics are formed, the ceramics are instantly broken and do not have the effect of delaying flame propagation.

The ceramics-forming metal precursor (c) is defined as a material that forms ceramics by combining with the ceramics-forming non-metal precursor in a Gob state by the ceramics-forming binder when an ultra-high temperature flame and the resulting pressure are generated. Accordingly, talc that does not form ceramics does not correspond to the ceramics-forming metal precursor according to the definition of the present invention.

For example, the ceramics-forming metal precursor (c) may have an average particle diameter of 0.1 to 170 µm, preferably 0.1 to 150 µm,more preferably 0.1 to 100 µm, still more preferably 0.1 to 60 um. Within this range, compatibility with the ceramics-forming non-metal precursor may be improved, and thus mechanical properties, electrical insulation properties, flame retardancy, and flame delay properties may be excellent.

In the present invention, the average particle diameter of the ceramics-forming metal precursor may be measured by a measuring method commonly used in the technical field to which this invention belongs, such as electron microscope analysis. As a specific example, the average particle diameter may be measured by an X-ray method.

### (d) Ceramics-forming non-metal precursor

In the present invention, the ceramics-forming non-metal precursor changes into a Gob state when an ultra-high temperature flame and the resulting pressure are generated, and the ceramics-forming non-metal precursor in the Gob state combines with the ceramics-forming metal precursor by the metal phosphate component generated by the thermal decomposition of the ceramics-forming binder, causing physical and chemical structural changes to form ceramics. Accordingly, the occurrence of holes or drips due to flame is prevented. Thus, when thermal runaway occurs, safety may be ensured due to the excellent flame delay properties.

For example, based on a total weight of components (a) to (e), the ceramics-forming non-metal precursor (d) may be included in an amount of 13 to 37 % by weight, preferably 18 to 34 % by weight, more preferably 19 to 32 % by weight, still more preferably 20 to 30 % by weight, still more preferably 25 to 32 % by weight. Within this range, mechanical properties, flame retardancy, and appearance characteristics may be excellent. In addition, when an ultra-high temperature flame and the resulting pressure occur, by forming ceramics and delaying flame propagation, safety may be secured.

For example, the ceramics-forming non-metal precursor (d) may include glass fiber, preferably E-glass fiber. In this case, flame retardancy and electrical insulation properties may be excellent. In addition, when ultra-high temperature flame and the resulting pressure occur, ceramics are formed by bonding with the ceramics-forming non-metal precursor by the ceramics-forming binder, thereby delaying flame propagation. Thus, even when thermal runaway occurs, the safety may be secured.

For example, the glass fiber may include chopped glass fiber. In this case, compatibility with the polymer may be excellent.

In the present invention, chopped glass fiber commonly used in the technical field to which the present invention belongs may be used without particular limitation.

In the present invention, E-glass fiber is a glass fiber with excellent electrical properties, and E-glass fiber commonly used in the technical field to which the present invention belongs may be used without particular limitation. E-glass fiber contains SiO₂, Al₂O₃, CaO, and B₂O₃ as upper components.

For example, the ceramics-forming non-metal precursor (d) may have an average particle diameter of 3 to 25 µm, preferably 5 to 20 µm, more preferably 7 to 15 µm. Within this range, mechanical strength with polymer may be improved, and the appearance characteristics of a final product may be excellent.

For example, the ceramics-forming non-metal precursor (d) may have an average length of 1 to 10 mm, preferably 2 to 7 mm, more preferably 2 to 5 mm. Within this range, mechanical strength with polymer may be improved, and the appearance characteristics of a final product may be excellent.

For example, the ceramics-forming non-metal precursor (d) may have an aspect ratio (L/D), which is a ratio of average length (L) to average particle diameter (D), of 200 to 550, preferably 220 to 450, more preferably 250 to 350, still more preferably 270 to 320. Within this range, due to excellent compatibility with the polymer, the surface appearance may be excellent.

In the present invention, the average particle diameter, average length, and aspect ratio of the ceramics-forming non-metal precursor are measured by microscopic analysis. At this time, the corresponding values of 30 specimens are calculated and the average values thereof are calculated.

For example, the ceramics-forming non-metal precursor (d) may be surface-treated with a silane compound or a urethane compound. Preferably, the ceramics-forming non-metal precursor (d) may be surface-treated with one or more surface treatment agents selected from the group consisting of an amino silane compound, an epoxy silane compound, and a urethane compound, more preferably an amino silane compound. In this case, dispersibility and surface wettability may be improved by combining with the polymer. As a result, mechanical properties including tensile strength of the resin composition may be improved.

For example, based on 100 % by weight in total of the surface-treated ceramics-forming non-metal precursor (ceramics-forming non-metal precursor + surface treatment agent), the surface treatment agent may be included in an amount of 0.1 to 10 % by weight, preferably 0.1 to 5 % by weight, more preferably 0.1 to 3 % by weight, still more preferably 0.1 to 0.8 % by weight, still more preferably 0.2 to 0.5 % by weight. Within this range, mechanical properties, physical property balance, and the appearance of a final product may be excellent.

As the amino silane compound, amino silane, which is generally used as a coating agent for glass fiber, may be used without particular limitations. For example, the amino silane compound may include one or more selected from the group consisting of gamma-glycidoxypropyl triethoxy silane, gamma-glycidoxypropyl trimethoxy silane, gamma-glycidoxypropyl methyldiethoxy silane, gamma-glycidoxypropyl triethoxy silane, 3-mercaptopropyl trimethoxy silane, vinyltrimethoxysilane, vinyltriethoxy silane, gamma-methacryloxypropyl trimethoxy silane, gamma-methacryloxy propyl triethoxy silane, gamma-aminopropyl trimethoxy silane, gamma-aminopropyl triethoxy silane, 3-isocyanato propyltriethoxy silane, gamma-acetoacetate propyl trimethoxysilane, acetoacetate propyl triethoxy silane, gamma-cyanoacetyl trimethoxy silane, gamma-cyanoacetyl triethoxy silane, and acetoxyaceto trimethoxy silane. In this case, mechanical properties and heat resistance may be excellent, and the surface properties of an injection molded product may be excellent.

As the epoxy silane compound, epoxy silane, which is generally used as a coating agent for glass fiber, may be used without particular limitations. For example, the epoxy silane compound may include one or more selected from the group consisting of 3-glycidyloxypropyltrimethoxysilane, 3-glycidyloxypropyltriethoxysilane, 3-glycidyloxypropyl(dimethoxy)methylsilane, and 2-(3,4-epoxycyclohexyl)ethyltrimethoxysilane. In this case, mechanical properties and heat resistance may be excellent, and the surface properties of an injection molded product may be excellent.

The glass fiber may be appropriately selected and used within the range commonly used in the art as long as the glass fiber follows the definition of the present invention, and the cross-sectional shape such as cylindrical or oval is not particularly limited.

For example, based on a total weight of components (a) to (e), a total amount of the ceramics-forming metal precursor (c) and the ceramics-forming non-metal precursor (d) may be 30 to 52 % by weight, preferably 32 to 50 % by weight, more preferably 34 to 48 % by weight, still more preferably 38 to 43 % by weight or 40 to 46 % by weight. Within this range, flame retardancy and electrical insulation properties may be excellent. In addition, when an ultra-high temperature flame and the resulting pressure occur, ceramics may be formed.

### (e) Flame retardant

In the present invention, the flame retardant imparts to the thermoplastic resin composition a high degree of flame retardancy of grade V-0 or higher according to the UL 94 test and excellent electrical insulation properties. In addition, when an ultra-high temperature flame and the resulting pressure occur, the flame retardant undergoes thermal decomposition. During thermal decomposition, almost no toxic gases are generated and no environmental hormones are released, so the flame retardant does not have a harmful effect on the human body or the environment.

For example, based on a total weight of components (a) to (e), the flame retardant (e) may be included in an amount of 2 to 8 % by weight, preferably 2.5 to 7 % by weight, more preferably 3 to 6.5 % by weight, still more preferably 3 to 6 % by weight, still more preferably 4 to 6 % by weight. Within this range, high flame retardancy of grade V-0 or higher according to UL 94 test may be provided, and mechanical properties and electrical insulation properties may be excellent.

For example, the flame retardant (e) may include one or more selected from the group consisting of a melamine-based flame retardant, a phosphazene-based flame retardant, and a phosphate-based flame retardant, preferably a melamine-based flame retardant. In this case, high flame retardancy of grade V-0 or higher according to the UL 94 test may be provided, mechanical properties and electrical insulation properties may be excellent, and no gases or environmental hormones harmful to humans or the environment are generated.

For example, the melamine-based flame retardant may include one or more selected from the group consisting of melamine cyanurate, triphenyl isocyanurate, melamine phosphate, melamine polyphosphate, melamine pyrophosphate, melamine borate, and melamine sulfate, preferably melamine polyphosphate. In this case, high flame retardancy of grade V-0 or higher according to the UL 94 test may be provided, and mechanical properties and electrical insulation properties may be excellent.

For example, the phosphazene-based flame retardant may be an organic compound having -P=N- bond in molecule. Preferably, the phosphazene-based flame retardant may include one or more selected from the group consisting of cyclic phosphazene compounds, chain phosphazene compounds, and cross-linked phosphazene compounds, more preferably cyclic phosphazene compounds. In this case, flame retardancy and mechanical properties may be excellent.

The cyclic phosphazene compound may be preferably a compound represented by Chemical Formula 7 below.

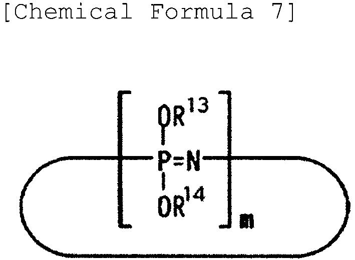

In Chemical Formula 7, m is an integer from 3 to 25, and R¹³ and R¹⁴ are the same or different and represent an aryl group or alkylaryl group.

In Chemical Formula 7, m is preferably an integer between 3 and 5.

More preferably, the cyclic phosphazene compound represented by Chemical Formula 7 may be a cyclic phenoxyphosphazene, wherein R¹³ and R¹⁴ are phenyl groups. Still more preferably, the cyclic phosphazene compound represented by Chemical Formula 7 may include one or more selected from the group consisting of phenoxycyclotriphosphazene, octaphenoxycyclotetraphosphazene, and decaphenoxycyclopentaphosphazene.

The chain phosphazene compound may be preferably a compound represented by Chemical Formula 8 below.

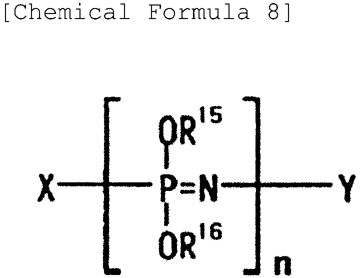

In Chemical Formula 8, n is an integer between 3 and 10,000, X represents an -N=P(OR¹⁵)₃ group or an -N=P(O)OR¹⁵ group, and Y represents a -P(OR¹⁶)₄ group or a -P(O)(OR¹⁶)₂ group. R¹⁵ and R¹⁶ are the same or different and represent an aryl group or alkylaryl group.

In Chemical Formula 8, n is preferably an integer from 3 to 100, more preferably an integer from 3 to 25.

The chain phosphazene compound represented by Chemical Formula 8 may be preferably a chain phenoxphosphazene in which R¹⁵ and R¹⁶ are phenyl groups.

For example, the cross-linked phosphazene compound is obtained by crosslinking one or more phosphazene-based flame retardants selected from the group consisting of a cyclic phosphazene compound and a chain phosphazene compound with a crosslinking group represented by Chemical Formula 9 below.

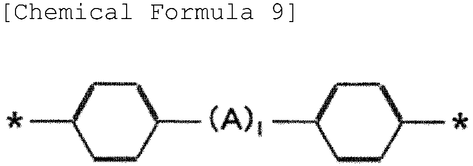

In Chemical Formula 9, (A)_{I} is -C(CH₃)₂-, -SO₂-, -S-, or -O-, I is an integer of 0 or 1, and -* represents a bond.

The cross-linked phosphazene compound may be preferably a cross-linked phenoxyphosphazene compound obtained by cross-linking the cyclic phenoxyphosphazene compound, in which R¹³ and R¹⁴ in Chemical Formula 7 are phenyl groups, by the cross-linking agent represented by Chemical Formula 9, a cross-linked phenoxyphosphazene compound obtained by cross-linking the chain phenoxyphosphazene compound, in which R¹⁵ and R¹⁶ in Chemical Formula 8 are phenyl groups, by the cross-linking agent represented by Chemical Formula 9, or a mixture thereof, more preferably a cross-linked phenoxyphosphazene compound obtained by cross-linking the cyclic phenoxyphosphazene compound by the cross-linking agent represented by Chemical Formula 9.

For example, the phosphate-based flame retardant may include one or more selected from the group consisting of trimethyl phosphate, triethyl phosphate, triphenyl phosphate (TPP), tricresyl phosphate (TCP), trixylenyl phosphate (TXP), resorcinolbis(diphenyl phosphate) (RDP), phenyl diresorcinolphosphate, bisphenol diphenyl phosphate (BDP), cresyl diphenyl phosphate, xylenyl diphenyl phosphate, phenyldi(isopropylphenyl) phosphate, triisophenylphosphate, diphenyl phosphate, resorcinol di phosphate, resorcinol bis(2,6-dixylenyl phosphate), and aromatic polyphosphate

For example, the thermoplastic resin composition may include a lubricant, an antioxidant or a mixture thereof.

For example, based on a total weight of components (a) to (e), the lubricant may be included in an amount of 0.01 to 5 % by weight, preferably 0.1 to 3 % by weight, more preferably 0.2 to 1 % by weight, still more preferably 0.2 to 0.5 % by weight. Within this range, mechanical properties may be excellent, and molding processability may be improved.

For example, the lubricant may include one or more selected from the group consisting of an ester lubricant, a fatty acid amide lubricant, an olefin lubricant, and a montan lubricant, preferably an ester lubricant, a fatty acid amide lubricant, or a mixture thereof. In this case, mechanical properties may be excellent, and molding processability may be improved.

For example, the ester lubricant may include one or more selected from the group consisting of fatty acid esters of alcohols, hydrogenated oils, butyl stearate, monoglyceride stearate, pentaerythritol tetrastearate, stearyl stearate, esterwax, and alkyl phosphate esters. In this case, mechanical properties may be excellent, and molding processability may be improved.

For example, the fatty acid amide lubricant may include one or more selected from the group consisting of stearamide, behanamide, ethylene bis(stearamide), N,N'-ethylene bis(12-hydroxy stearamide), erucamide, oleamide, and ethylene bis oleamide. In this case, mechanical properties may be excellent, and molding processability may be improved.

For example, the olefin lubricant may be polyethylene wax, polypropylene wax, or a mixture thereof. In this case, mechanical properties may be excellent, and molding processability may be improved.

For example, the montan lubricant may be montan wax, montan ester wax, or a mixture thereof. For example, the montan ester wax may include one or more selected from wax obtained by esterifying montan wax with ethylene glycol and montanic acid, wax esterified with glycerin and montanic acid, calcium montanate containing montanic acid ester, and ester-mixed wax based on montan acid. In this case, mechanical properties may be excellent, and molding processability may be improved.

For example, based on a total weight of components (a) to (e), the antioxidant may be included in an amount of 0.01 to 5 % by weight, preferably 0.1 to 3 % by weight, more preferably 0.2 to 1 % by weight, still more preferably 0.2 to 0.5 % by weight. Within this range, oxidation due to heat may be prevented during the extrusion process, and mechanical properties and heat resistance may be excellent.

For example, the antioxidant may include one or more selected from the group consisting of a phosphorus antioxidant, a hindered phenolic antioxidant, and a phenolic antioxidant. In this case, oxidation due to heat may be prevented during the extrusion process, and mechanical properties and heat resistance may be excellent.

For example, the phosphorus antioxidant may include one or more selected from the group consisting of bis(dialkyl phenyl)pentaerythritol diphosphite ester, phosphite ester, trioctyl phosphite, trilauryl phosphite, tridecyl phosphite, (octyl)diphenyl phosphite, tris(2,4-dit-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl) phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyl dibenz[d,f][1.3.2]-dioxa-phosphepine-6-yl}oxy]-N,N-bis[2-[{2,4,8,10-tetra-t-butyl-dibenz[d,f][1.3.2]-dioxaphosphepine-6-yl}oxy]ethyl]-ethanamine, and 6-[3-(3-t-butyl-4-hydroxy-5-methylphenyl)propoxy]-2,4,8,10-tetra-t-butyl dibenz[d,f][1.3.2]-dioxaphosphepine, more preferably tris(2,4-di-tertiary-butylphenyl) phosphite (IF168). In this case, oxidation due to heat may be prevented during the extrusion process, and mechanical properties and heat resistance may be excellent.

For example, the hindered phenolic antioxidant may include one or more selected from the group consisting of pentaerythritol tetrakis[3-(3,5-di-t-butyl-4-hydroxyphenyl)propionate] and 1,3,5-trimethyl-2,4,6-tris(3,5-di-t-butyl-4-hydroxybenzyl) benzene, preferably pentaerythritol tetrakis[3-(3,5-di-t-butyl-4-hydroxyphenyl)propionate]. In this case, oxidation due to heat may be prevented during the extrusion process, and mechanical properties and heat resistance may be excellent.

For example, the phenolic antioxidant may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methylphenyl)propionyloxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-di-t-butyl-4-hydroxyphenyl)propionic acid stearyl ester, more preferably octadecyl 3-(3,5-di-tert-butyl-4-hydroxyphenyl)propanoate (IR1076). In this case, oxidation due to heat may be prevented during the extrusion process, and mechanical properties and heat resistance may be excellent.

The thermoplastic resin composition may further include one or more additives selected from the group consisting of plasticizers, heat stabilizers, anti-dripping agents, light stabilizers, pigments, dyes, inorganic additives (except glass fiber), and carbon fiber.

For example, based on 100 parts by weight in total of components (a) to (e), the additives may be included in an amount of 0.01 to 5 parts by weight, preferably 0.01 to 3 parts by weight, more preferably 0.05 to 1 part by weight. Within this range, the required properties may be efficiently implemented without deteriorating the intrinsic properties of the thermoplastic resin composition of the present invention.

### Thermoplastic resin composition

The thermoplastic resin composition may have a flame retardancy of grade V-0 or higher as measured using an injection specimen with dimensions of 127 mm × 12.7 mm × 1.5 mm according to UL 94 test (vertical burning test). In this case, physical property balance and flame retardancy may be excellent.

When applying a 1200 °C flame formed with oxygen and propane gases to a 150 mm × 150 mm × 3 mm specimen according to torch-and-grit evaluation of UL 2596 and measuring flame endurance time until a hole or drip is formed, the thermoplastic resin composition may have a flame endurance time of 600 seconds or more. Within this range, physical property balance may be excellent. In addition, when an ultra-high temperature flame and the resulting pressure occur, by forming ceramics and delaying flame propagation, safety may be secured.

When a comparative tracking index (CTI) is measured using a 3 mm thick specimen according to IEC 60112, the thermoplastic resin composition may be classified as grade 1 or higher, preferably grade 0 or higher by performance level category (PLC) classification. Within this range, physical property balance and electrical insulation properties may be excellent.

### Method of preparing thermoplastic resin composition

The method of preparing a thermoplastic resin composition according to the present invention includes a step of kneading and extruding 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e). At this time, the kneading and extrusion are performed using an extruder with nine or more kneading blocks. In this case, flame retardancy and insulating properties may be excellent. In addition, when an unexpected ultra-high temperature flame and the resulting pressure occur, by forming ceramics and delaying flame propagation, safety may be secured, and eco-friendliness may be achieved.

For example, the kneading and extrusion may be performed at a barrel temperature of 200 to 350 °C, preferably 220 to 330 °C, more preferably 220 to 310 °C. In this case, the throughput per unit time may be increased, melt-kneading may be sufficiently performed, and thermal decomposition of polymers may be prevented.

For example, the kneading and extrusion may be performed at a screw rotation speed of 100 to 500 rpm, preferably 150 to 400 rpm, more preferably 150 to 300 rpm. Within this range, the throughput per unit time may be increased, and process efficiency may be excellent.

The thermoplastic resin composition obtained through the kneading and extrusion may be provided as a pellet form.

### Flame retardant composition

The flame retardant composition of the present invention includes a ceramics-forming binder, a ceramics-forming metal precursor, a ceramics-forming non-metal precursor, and a flame retardant. In this case, flame retardancy and insulating properties may be excellent. In addition, when an unexpected ultra-high temperature flame and the resulting pressure occur, by forming ceramics and delaying flame propagation, even when thermal runaway occurs, the safety of property and life may be secured. In addition, environmental friendliness may be achieved because toxic gases and environmental hormones are not generated during thermal decomposition.

In the flame retardant composition, the ceramics-forming binder is thermally decomposed when an ultra-high temperature flame of 1200 °C or higher and the resulting pressure are generated, generating a metal phosphate component. The metal phosphate component combines a ceramics-forming metal precursor and a ceramics-forming non-metal precursor that has reached Gob temperature, causing physical and chemical structural changes to form ceramics. When thermal runaway of a battery occurs, the formed ceramics delays flame propagation to secure the safety of property and life.

For example, based on a total weight thereof, the flame retardant composition may include 11 to 34 % by weight of the ceramics-forming binder, 14.5 to 41 % by weight of the ceramics-forming metal precursor, 24 to 59 % by weight of the ceramics-forming non-metal precursor, and 4 to 14 % by weight of the flame retardant, preferably 13 to 32 % by weight of the ceramics-forming binder, 16 to 35 % by weight of the ceramics-forming metal precursor, 30 to 57 % by weight of the ceramics-forming non-metal precursor, and 4.5 to 12 % by weight of the flame retardant, more preferably 15.5 to 31 % by weight of the ceramics-forming binder, 17.5 to 28 % by weight of the ceramics-forming metal precursor, 35 to 55 % by weight of the ceramics-forming non-metal precursor, and 5 to 9.5 % by weight of the flame retardant, still more preferably 15.5 to 25 % by weight of the ceramics-forming binder, 20 to 27 % by weight of the ceramics-forming metal precursor, 43 to 53 % by weight of the ceramics-forming non-metal precursor, and 7 to 9 % by weight of the flame retardant. Within this range, flame retardancy and insulating properties may be excellent. In addition, when an unexpected ultra-high temperature flame and the resulting pressure occur, by forming ceramics and delaying flame propagation, even when thermal runaway occurs, the safety of property and life may be secured. In addition, environmental friendliness may be achieved because toxic gases and environmental hormones are not generated during thermal decomposition.

The contents of the flame retardant composition include the contents of the thermoplastic resin composition described above, and are omitted here to avoid duplicate description.

### Molded article

A molded article of the present invention includes the thermoplastic resin composition of the present invention. In this case, flame retardancy and electrical insulation properties may be excellent. In addition, when ultra-high temperature flame and the resulting pressure occur, ceramics is formed and flame propagation is delayed. Thus, even when thermal runaway occurs, safety may be secured and eco-friendliness may be achieved.

For example, the molded article may be an electrical/electronic part or an automobile part, specifically, an electric vehicle electrical part or a battery part. In this case, flame retardancy and electrical insulation properties may be excellent. In addition, when ultra-high temperature flame and the resulting pressure occur, ceramics is formed and flame propagation is delayed. Thus, even when thermal runaway occurs, safety may be secured and eco-friendliness may be achieved.

For example, the electric vehicle battery part may be a plastic upper cover, module housing, or busbar of an electric vehicle battery.

A method of manufacturing a molded article according to the present invention includes a step of manufacturing thermoplastic resin composition pellets by kneading and extruding 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e), and a step of injecting the pellets to manufacture a molded article. At this time, the kneading and extrusion are performed using an extruder with nine or more kneading blocks. In this case, flame retardancy and insulating properties may be excellent. In addition, when an unexpected ultra-high temperature flame and the resulting pressure occur, by forming ceramics and delaying flame propagation, even when thermal runaway occurs, safety may be secured, and eco-friendliness may be achieved.

The injection is not particularly limited by the method and conditions commonly used in the technical field to which the present invention belongs, and can be appropriately selected and applied as needed.

In describing the thermoplastic resin composition of the present invention, the molded article, and the methods thereof, unless specified otherwise, other conditions (for example, the configuration and specifications of an extruder and an injection machine, extrusion and injection conditions, additives, and the like) may be appropriately selected and implemented as needed when the conditions are within the range commonly practiced in the art, without particular limitation.

The present invention will be described with reference to the drawings below.

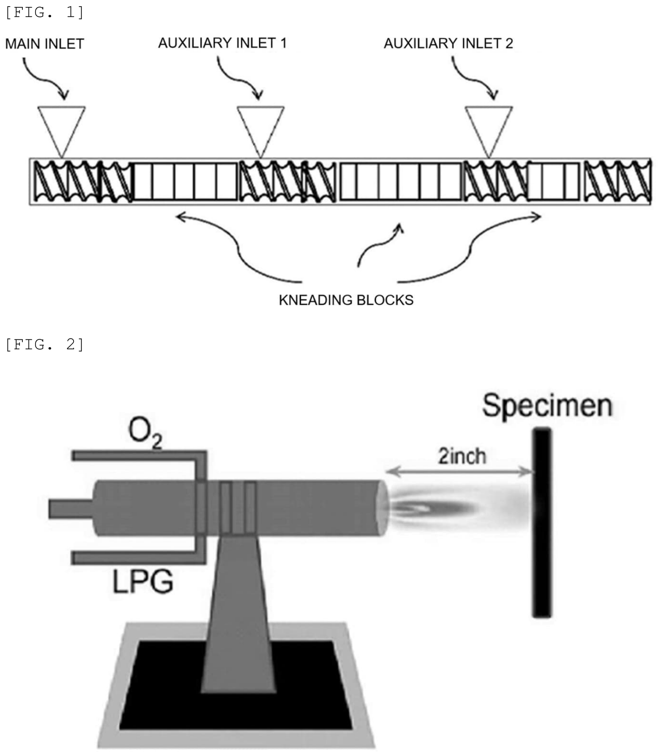

FIG. 1 below is a schematic diagram of an extruder having nine or more kneading blocks used to prepare the thermoplastic resin composition of the present invention.

The type of extruder is not particularly limited, and an extruder commonly used in the art may be appropriately selected and used. For example, a single-screw extruder equipped with one screw or a multi-screw extruder equipped with a plurality of screws may be used. Considering uniform kneading of materials, ease of processing, and economic efficiency, a twin-screw extruder equipped with two screws is preferably used.

The extruder includes a raw material feeder for feeding materials into a barrel, a screw for conveying and kneading the fed materials, and a die for extruding the kneaded materials. In this case, the screw consists of a plurality of screw elements for various functions.

One or more feeders may be provided. Optionally, two or more feeders may be provided. For example, a main inlet and optionally an auxiliary inlet may be provided. Optionally, more than two auxiliary inlets may be provided.

As a specific example, the polymer, the ceramics-forming binder, the flame retardant, and the additives including a lubricant and an antioxidant may be injected into the main inlet, the ceramics-forming metal precursor may be injected into the auxiliary inlet 1, and the ceramics-forming non-metal precursor may be injected into the auxiliary inlet 2. In this case, the components may be mixed uniformly, and thus physical property balance, electrical insulation properties, and flame retardancy may be excellent. In addition, when an ultra-high temperature flame and pressure occur, flame delay properties may be excellent during thermal runaway.

As another example, the polymer and the additives may be injected into the main inlet, the ceramics-forming binder and the flame retardant may be injected into the auxiliary inlet 1, and the ceramics-forming metal precursor and the ceramics-forming non-metal precursor may be injected into the auxiliary inlet 2. In this case, the components may be mixed uniformly, and thus physical property balance, electrical insulation properties, and flame retardancy may be excellent. In addition, when an ultra-high temperature flame and the resulting pressure occur, flame delay properties may be excellent during thermal runaway.

As another example, the polymer may be injected into the main inlet, a portion of the ceramics-forming binder, ceramics-forming metal precursor, ceramics-forming non-metal precursor, flame retardant, and additives may be injected into the auxiliary inlet 1, and the rest may be injected into the auxiliary inlet 2. In this case, the components may be mixed uniformly, and thus physical property balance, electrical insulation properties, and flame retardancy may be excellent. In addition, when an ultra-high temperature flame and the resulting pressure occur, flame delay properties may be excellent.

The kneading blocks of the present invention correspond to the screw elements. Specifically, each kneading block consists of a plurality of discs, preferably 3 to 7 discs, 5 to 7 discs, 3 to 5 discs, or 4 to 5 discs, and has a polygonal cross-section or an elliptical cross-section. The kneading blocks are arranged continuously in a direction in which materials are conveyed. In addition, in the kneading block, the phase angle of the discs (indicating the travel angle between discs) is preferably 45 to 90°.

In addition, the kneading block includes a forward kneading block capable of conveying, distributing, and mixing materials, a neutral kneading block capable of distributing and mixing materials without conveying the same, and a backward kneading block capable of conveying materials in a direction opposite to the conveying direction.

For example, the thermoplastic resin composition according to the present invention may be prepared by a method including a step of performing kneading and extrusion using an extruder having 9 or more, preferably 10 or more, more preferably 12 or more, as a preferred example, 9 to 18, as a more preferred example, 10 to 18, as a still more preferred example, 12 to 16 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of the ceramics-forming metal precursor and ceramics-forming non-metal precursor and the compatibility of the composition may be further improved, and accordingly, a high-quality thermoplastic resin composition may be provided.

9 or more kneading blocks may be arranged continuously, or may be arranged discontinuously between screws. As a specific example, 3 to 6 kneading blocks may be provided continuously between the main inlet and the auxiliary inlet 1, 3 to 8 kneading blocks may be provided continuously between the auxiliary inlet 1 and the auxiliary inlet 2, and 2 to 5 kneading blocks may be provided between the auxiliary inlet 2 and an outlet (not shown). With this configuration, local heat generation during melt-kneading may be controlled to prevent thermal deformation of raw materials. In addition, excessive cutting of the glass fiber may be prevented, thereby preventing deterioration in mechanical properties, electrical insulation properties, flame retardancy, and flame delay properties during thermal runaway.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

The materials used in Examples and Comparative Examples below are as follows.
* (a) Polymer
   - (a-1) PA6: Polyamide 6 resin (relative viscosity: 2.2)
   - (a-2) PA66: Polyamide 66 resin (relative viscosity: 2.4)
   - (a-3) PA56: Polyamide 56 resin (relative viscosity: 2.5)
   - (a-4) PPE: Poly(2,6-dimethyl-1,4-phenylene) ether (intrinsic viscosity: 35~42 dl/g)
* (b) Ceramics-forming binder
   - (b-1) ADP: Aluminum diethyl phosphinate (Clariant Co., OP1230)
* (c) Ceramics-forming metal precursor
   - (c-1) Kaolin: Aluminum silicate
   - (c-2) Mica: Aluminum silicate
   - (c-3) Wollastonite: Calcium silicate
* (c') Ceramics-nonforming metal precursor
   - (c'-1) Talc: Magnesium silicate
* (d) Ceramics-forming non-metal precursor
   - (d-1) Glass fiber: Chopped glass fiber having an average particle diameter of 10 to 13 µm and an average length of 3 to 4 mm and being surface-treated with amino silane
* (e) Flame retardant
   - (e-1) MPP: Melamine polyphosphate
   - (e-2) RDX: Resorcinol bis (2,6-dixylenyl phosphate)
* (f) Additives:
   - Lubricant: EP184 (Hanyang Hwa Seong Co.) and Sunlube EBS DA-01 (Seon Gu Co.): 0.25 % by weight
   - Antioxidant: Mixture of AO-412S, IR1010, IR1098, and IR68: 0.25 % by weight

### Examples 1 to 10 and Comparative Examples 1 to 9

A polymer, a ceramics-forming binder, a ceramics-forming metal precursor, a ceramics-forming non-metal precursor, a flame retardant, and additives were added into a twin-screw extruder (SM Co., T40) having 9 or more mixing blocks in amounts shown in Tables 1 and 2 below, and were melt-kneaded and extruded at a temperature of 230 to 310 °C and a rotation speed of 150 to 300 rpm to obtain pellets. The evaluation specimens were manufactured using an injection molding machine (80 tons, Engel Co.) using the pellets. The manufactured specimens were left at room temperature for more than 48 hours, and the physical properties thereof were measured. The results are shown in Tables 1 and 2 below.

At this time, the twin-screw extruder has two or more inlets. The polymer, the ceramics-forming binder, the flame retardant, and the additives were injected into the main inlet, the ceramics-forming metal precursor was injected into the auxiliary inlet 1, and the ceramics-forming non-metal precursor was injected into the auxiliary inlet 2.

### [Test Examples]

The properties of the specimens manufactured in Examples 1 to 10 and Comparative Examples 1 to 9 were measured by the following methods, and the results are shown in Tables 1 and 2 below.

### Measurement methods

* Flame retardancy: Flame retardancy was measured according to the UL 94 V test (vertical burning test) using an injection specimen with the size of 127 mm × 12.7 mm × 1.5 mm.
* Comparative tracking index (CTI): The short-cut voltage was calculated when 50 drops of electrolyte solution were dropped on a 3 mm thick specimen according to IEC 60112. Based on the CTI, a performance level category (PLC) grade was assigned as shown in Table 3.

**[Table 3]**

| Tracking index (volts) | PLC rating |
|---|---|
| 600 ≤ TI | 0 |
| 400 ≤ TI < 600 | 1 |
| 250 ≤ TI < 400 | 2 |
| 175 ≤ TI < 250 | 3 |
| 100 ≤ TI < 175 | 4 |
| 0 ≤ TI < 100 | 5 |

| | |
|---|---|
| * Flame endurance time (sec): As shown in FIGS. 2 and 3, a 1200 °C flame formed with oxygen and propane gases was applied to a 150 mm × 150 mm × 3 mm specimen based on the torch-and-grit evaluation of UL 2596, and the time until a hole or drip occurred was measured. | |

**[Table 1]**

| Classifi cation (wt%) | Examples | | | | | | | | | |
|---|---|---|---|---|---|---|---|---|---|---|
| | 1 | 2 | 3 | 4 | 5 | 6 | 7 | 8 | 9 | 10 |
| (a-1) PA6 | 39.5 | | | | 39.5 | 39.5 | 44.5 | 37.5 | 42.5 | 44.5 |
| (a-2) PA66 | | 39.5 | | 23.5 | | | | | | |
| (a-3) PA56 | | | 39.5 | | | | | | | |
| (a-4) | | | | 16 | | | | | | |
| PPE | | | | | | | | | | |
| (b-1) ADP | 10 | 10 | 10 | 10 | 10 | 10 | 10 | 10 | 10 | 17 |
| (c-1) Kaolin | 15 | 15 | 15 | 15 | | | 10 | 17 | 15 | 15 |
| (c-2) Mica | | | | | 15 | | | | | |
| (c-3) Wollasto nite | | | | | | 15 | | | | |
| (c'-1) Talc | | | | | | | | | | |
| (d-1) Glass fiber | 30 | 30 | 30 | 30 | 30 | 30 | 30 | 30 | 27 | 20 |
| (e-1) MPP | 5 | 5 | 5 | | 5 | 5 | 5 | 5 | 5 | 3 |
| (e-2) RDX | | | | 5 | | | | | | |
| (f) Additives | 0.5 | 0.5 | 0.5 | 0.5 | 0.5 | 0.5 | 0.5 | 0.5 | 0.5 | 0.5 |

| Physical properties | | | | | | | | | | |
|---|---|---|---|---|---|---|---|---|---|---|
| CTI (PLC rating) | 0 | 0 | 0 | 1 | 0 | 0 | 0 | 0 | 0 | 0 |
| Flame retardancy | V-0 | V-0 | V-0 | V-0 | V-0 | V-0 | V-0 | V-0 | V-0 | V-0 |
| Flame endurance time (sec.) | 600 seco nds or more | 600 seco nds or more | 600 seco nds or more | 600 seco nds or more | 600 seco nds or more | 600 seco nds or more | 600 seco nds or more | 600 seco nds or more | 600 seco nds or more | 600 seco nds or more |

**[Table 2]**

| Classificatio n (wt%) | Comparative Examples | | | | | | | | |
|---|---|---|---|---|---|---|---|---|---|
| | 1 | 2 | 3 | 4 | 5 | 6 | 7 | 8 | 9 |
| (a-1) PA6 | 39. 5 | 39.5 | 54. 5 | 52. 5 | | 39. 5 | 49. 5 | 24. 5 | 34. 5 |
| (a-2) PA66 | | | | | 39. 5 | | | | |
| (a-3) PA56 | | | | | | | | | |
| (a-4) PPE | | | | | | | | | |
| (b-1) ADP | 3 | 14 | 10 | 10 | 3 | 10 | 10 | 10 | 25 |
| (c-1) Kaolin | 15 | 15 | 25 | 2 | 15 | | 5 | 15 | 10 |
| (c-2) Mica | | | | | | | | | |
| (c-3) Wollastonite | | | | | | | | | |
| (c'-1) Talc | | | | | | 15 | | | |
| (d-1) Glass fiber | 30 | 30 | 5 | 30 | 30 | 30 | 30 | 45 | 25 |
| (e-1) MPP | 12 | 1 | 5 | 5 | 12 | 5 | 5 | 5 | 5 |
| (e-2) RDX | | | | | | | | | |
| (f) Additives | 0.5 | 0.5 | 0.5 | 0.5 | 0.5 | 0.5 | 0.5 | 0.5 | 0.5 |

| Physical properties | | | | | | | | | |
|---|---|---|---|---|---|---|---|---|---|
| CTI (PLC rating) | 0 | 0 | 0 | 1 | 0 | 0 | 0 | - | - |
| Flame retardancy | V-1 | V-1 | V-1 | V-1 | V-1 | V-1 | V-0 | - | - |
| Flame endurance time (sec.) | 50 | 600 seconds or more | 100 | 60 | 60 | 70 | 80 | - | - |

| | | | | | | | | | |
|---|---|---|---|---|---|---|---|---|---|
| -: Physical properties cannot be measured because extrusion is not possible | | | | | | | | | |

As shown in Tables 1 and 2, compared to Comparative Examples 1 to 9, the thermoplastic resin compositions of the present invention (Examples 1 to 10) exhibited excellent flame retardancy and insulating properties. In addition, when an ultra-high temperature flame of 1200 °C and the resulting pressure occurred, ceramics was formed flame propagation was delayed, and the flame endurance time was 600 seconds or more. In addition, holes were not formed. Accordingly, even when thermal runaway of a battery occurs, the safety of property and life may be secured. In addition, since no toxic gases or environmental hormones are generated, there is no harmful effect on the human body or the environment.

Specifically, in the case of Comparative Examples 1 and 5 in which a small amount of ADP (b-1) as a ceramics-forming binder and an excess of MPP (e-1) as a flame retardant were included, flame retardancy was reduced, and flame endurance time was very poor. In the case of Comparative Example 2 in which a small amount of MPP (e-1) was included, flame retardancy was reduced.

In addition, in the case of Comparative Example 3 in which a small amount of glass fiber (d-1) as a ceramics-forming non-metal precursor and an excess of kaolin (c-1) as a ceramics-forming metal precursor were included, flame retardancy was reduced, and flame endurance time was very poor.

In addition, in the case of Comparative Example 4 in which a small amount of kaolin (c-1) as a ceramics-forming metal precursor was included and Comparative Example 6 in which talc (c'-1) as a ceramics-nonforming metal precursor was included, flame retardancy was reduced, and flame endurance time was very poor.

In addition, in the case of Comparative Example 7 in which a small amount of kaolin (c-1) was included, flame endurance time was very poor. In the case of Comparative Example 8 in which an excess of glass fiber (d-1) was included and Comparative Example 9 in which an excess of ADP (b-1) was included, extrusion was difficult.

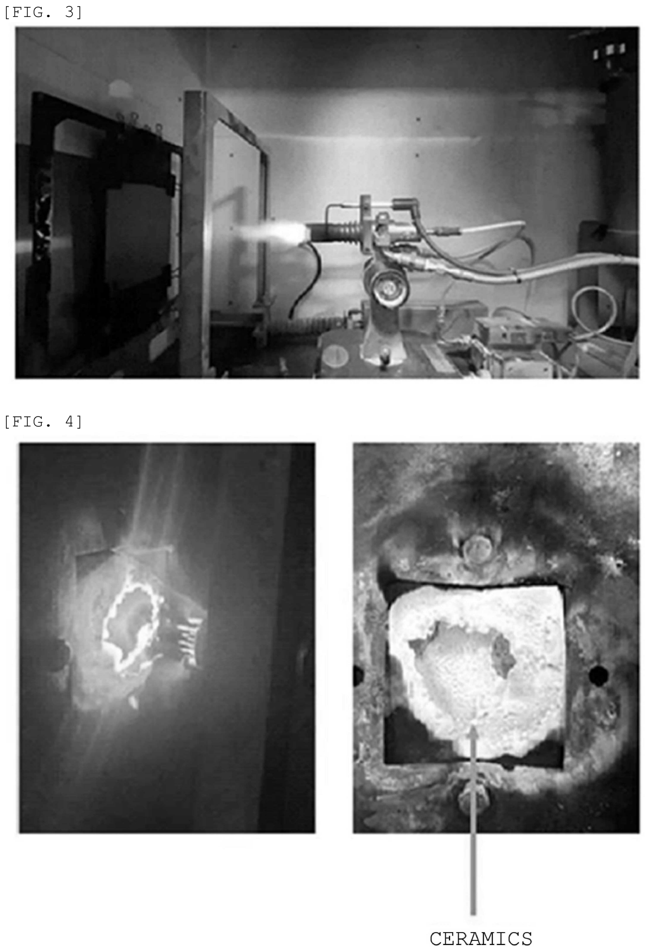

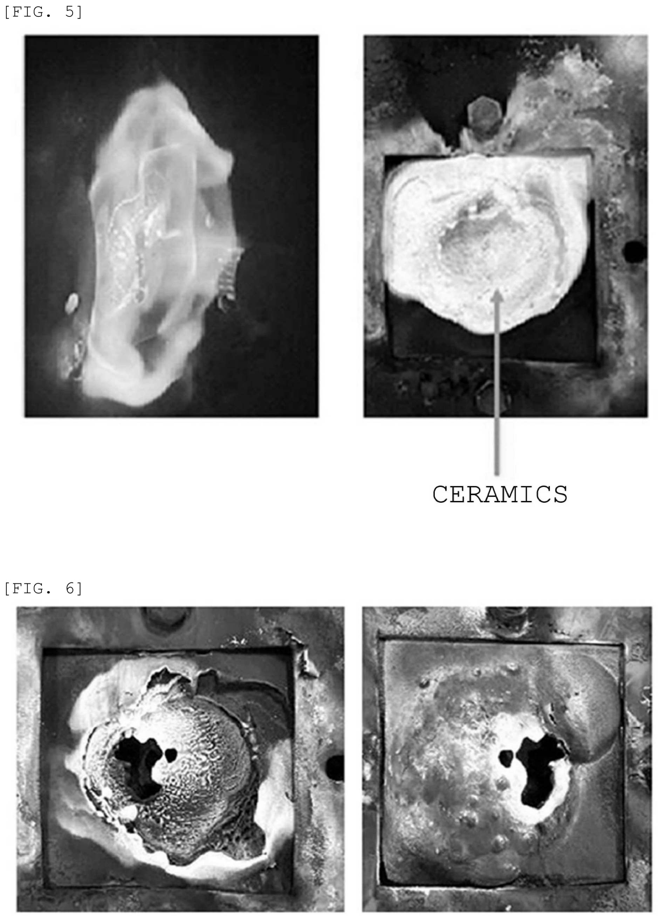

As shown in FIGS. 4 and 5 below, when specimens manufactured using the thermoplastic resin compositions according to Examples 1 and 5 of the present invention were subjected to a flame of 1200 °C and the resulting pressure formed with oxygen and propane gases according to torch-and-grit evaluation of UL 2596, ceramics was formed, and no holes were formed even after 600 seconds or more, indicating that flame endurance time was greatly improved.

On the other hand, as shown in FIG. 6 below, when the specimen manufactured using the thermoplastic resin composition according to Comparative Example 6 was subjected to a flame of 1200 °C and the resulting pressure formed with oxygen and propane gases according to torch-and-grit evaluation of UL 2596, ceramics was not formed, and holes were formed in 70 seconds.

In conclusion, in the case of the thermoplastic resin composition including the polymer, the ceramics-forming binder, the ceramics-forming metal precursor, the ceramics-forming non-metal precursor, and the flame retardant in predetermined contents according to the present invention, flame retardancy and electrical insulation properties were excellent. In addition, when an ultra-high temperature flame and the resulting pressure occurred, by forming ceramics and delaying flame propagation, safety was secured even when thermal runaway occurred. In addition, eco-friendliness was achieved.

## Claims

1. A thermoplastic resin composition comprising 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e).

2. The thermoplastic resin composition according to claim 1, wherein the polymer (a) comprises one or more selected from the group consisting of a polyamide resin, a poly (arylene ether) resin, a polyalkylene terephthalate resin, a polystyrene resin, a polycarbonate resin, and a modified polymer thereof.

3. The thermoplastic resin composition according to claim 1, wherein the ceramics-forming binder (b) comprises a metal phosphorus flame retardant.

4. The thermoplastic resin composition according to claim 1, wherein the ceramics-forming metal precursor (c) comprises a metal silicate, or comprises magnesium (without containing magnesium oxide) or magnesium oxide in an amount of 3 % by weight or less based on a total weight of the ceramics-forming metal precursor.

5. The thermoplastic resin composition according to claim 4, wherein the metal silicate comprises one or more selected from the group consisting of aluminum silicate and calcium silicate.

6. The thermoplastic resin composition according to claim 5, wherein the aluminum silicate comprises one or more selected from the group consisting of kaolin, kaolinite, pyrophyllite, mica, feldspar, spodumene, and petalite.

7. The thermoplastic resin composition according to claim 5, wherein the calcium silicate comprises wollastonite.

8. The thermoplastic resin composition according to claim 1, wherein the ceramics-forming non-metal precursor (d) comprises glass fiber.

9. The thermoplastic resin composition according to claim 1, wherein the flame retardant (e) comprises one or more selected from the group consisting of a melamine-based flame retardant, a phosphazene-based flame retardant, and a phosphate-based flame retardant.

10. The thermoplastic resin composition according to claim 1, wherein, when applying a 1200 °C flame formed with oxygen and propane gases to a 150 mm × 150 mm × 3 mm specimen according to torch-and-grit evaluation of UL 2596 and measuring flame endurance time until a hole or drip is formed, the thermoplastic resin composition has a flame endurance time of 600 seconds or more, or when a comparative tracking index (CTI) is measured using a 3 mm thick specimen according to IEC 60112, the thermoplastic resin composition is classified as grade 1 or higher by performance level category (PLC) classification.

11. The thermoplastic resin composition according to claim 1, wherein the thermoplastic resin composition comprises a lubricant, an antioxidant, or a mixture thereof.

12. A method of preparing a thermoplastic resin composition, comprising kneading and extruding 32.5 to 49 % by weight of a polymer (a), 7 to 20.5 % by weight of a ceramics-forming binder (b), 6.5 to 20.5 % by weight of a ceramics-forming metal precursor (c), 13 to 37 % by weight of a ceramics-forming non-metal precursor (d), and 2 to 8 % by weight of a flame retardant (e), wherein the kneading and extrusion are performed using an extruder with nine or more kneading blocks.

13. A flame retardant composition comprising a ceramics-forming binder, a ceramics-forming metal precursor, a ceramics-forming non-metal precursor, and a flame retardant.

14. The flame retardant composition according to claim 13, wherein, based on a total weight thereof, the flame retardant composition comprises 11 to 34 % by weight of the ceramics-forming binder, 14.5 to 41 % by weight of the ceramics-forming metal precursor, 24 to 59 % by weight of the ceramics-forming non-metal precursor, and 4 to 14 % by weight of the flame retardant.

15. A molded article comprising the thermoplastic resin composition according to any one of claims 1 to 11.
